# EUROPEAN PATENT APPLICATION

(11) **EP 1 621 099 A1**
(43) Date of publication of application: **01.02.2006**
(21) Application number: 04254627.5
(22) Date of filing: 31.07.2004
(51) Int. Cl.: A45C 5/14, A45C 9/00

(54) **Transport apparatus**

(71) Applicant: Hume, Shaun, Cranbrook, Kent TN17 2LL (GB)
(72) Inventor: Hume, Shaun, Cranbrook, Kent TN17 2LL (GB)
(74) Representative: Hughes, Brian Patrick

(57) **Abstract**

Transport apparatus comprises an outer shell 16,18 having a circular cross section, a pair of diametrically opposed stub axles 20 fixed on the outer of the shell, a pair of aligned stub axles fixed on the inner surface of the shell, a handle freely rotatable on the external stub axles, and a container freely rotatable on the inner stub axles, the outer shell having an upper section 16 which is removable to allow access to the inner container.

## Description

This invention is concerned with transport apparatus, and in particular with such apparatus that is sufficiently light to be used by children not only to transport materials for school, for example, but also as playthings.

The present invention is transport apparatus comprising an outer shell having a circular cross section, a pair of diametrically opposed stub axles fixed on the outer of the shell, a pair of aligned stub axles fixed on the inner surface of the shell, a handle freely rotatable on the external stub axles, and a container freely rotatable on the inner stub axles, the outer shell having an upper section which is removable to allow access to the inner container.

The outer shell is preferably spherical.

The outer shell may comprise upper and lower substantially hemispherical sections, the axles being mounted on the lower section while the upper section has diametrically opposed resilient lugs each provided with a hole for removably engaging an external axle.

Each lug. may have two holes, one for engaging an axle to close the shell and the other engaging the axle to allow rotational movement or the upper shell section relative to the lower section and thus access to the interior of the shell.

The container may have diametrically opposed brackets for engaging the inner axles to support the container.

The brackets are preferably keyhole shaped to provide an upper arcuate bearing surface and lower side surfaces for guiding an axle towards the bearing surface.

The container may have a handle and a flat bottom, and may be subdivided to provide open topped compartments.

The handle may have a U-shaped yoke whose legs are resiliently biassed into engagement with the outer stub axles.

Preferably the legs have circular apertures for engaging the stub axles.

An embodiment of the present invention will now be described by way of example, with reference to the accompanying drawings, in which:-
- Fig. 1: is a side elevation of an outer shell of an embodiment of apparatus according to the present invention showing the two sections of the shell;
- Fig. 2: is a side elevation of the lower section of the shell of Fig. 1
- Fig. 3: is a plan view of a handle used in the embodiment of Fig. 1;
- Fig. 4: is a side elevation of a container used in the embodiment of Fig. 1;
- Fig. 5: is a plan view of the container of Fig.4;
- Fig 6: is a side elevation of the container of Fig.4;
- Figs. 7 and 8: are respectively a side elevation and a plan view of an insert used with the container of Fig. 4; and
- Fig. 9: is a side elevation of the container being placed in the outer shell.

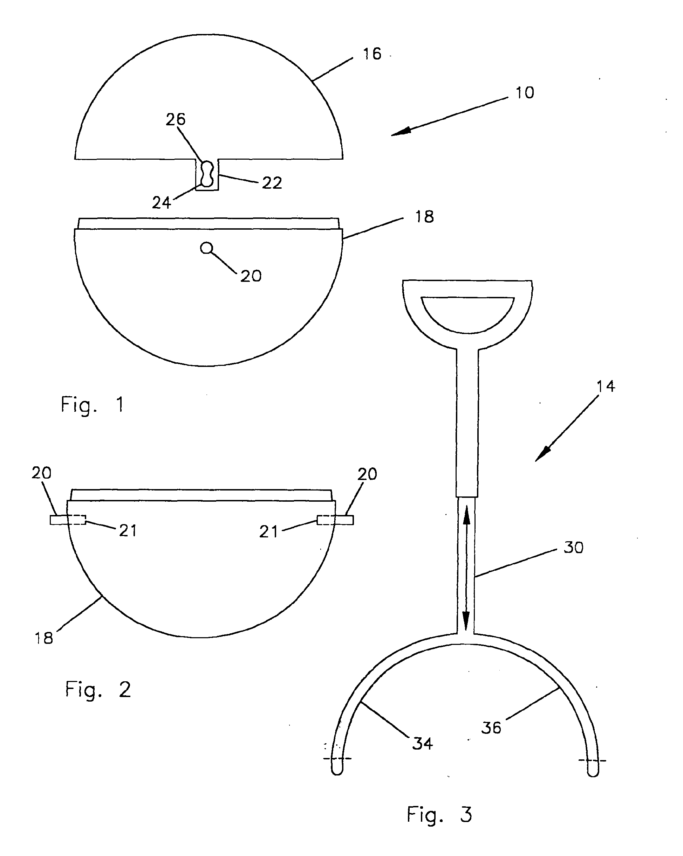

Referring now to figs. 1 to 4, apparatus according to the present invention comprises an outer shell 10, as seen in Fig. 1, a container 12 normally located in the shell 10, and a handle 14 for pulling the shell 10.

The outer shell 10, as seen in Figs. 1 and 2, is in this embodiment spherical, but it could also be cylindrical as both shapes have a circular cross section allowing the shell to roll about a diametrical axis. The shell 10 has an upper section 16 and a lower section 18, and the axis about which the shell can roll is defined by external stub axles 20 fixed on the lower section 18. The sections 16 and 18 are substantially hemispherical though the lower section 18 is slightly larger as it mounts the diametrical stub axles 20. A pair of fixed internal stub axles 21 is provided on the inner surface of the lower shell portion 18, as seen in Fig.2, in the same plane as the outer axles 20. In this embodiment the outer and inner axles are coaxial but this need not be so.

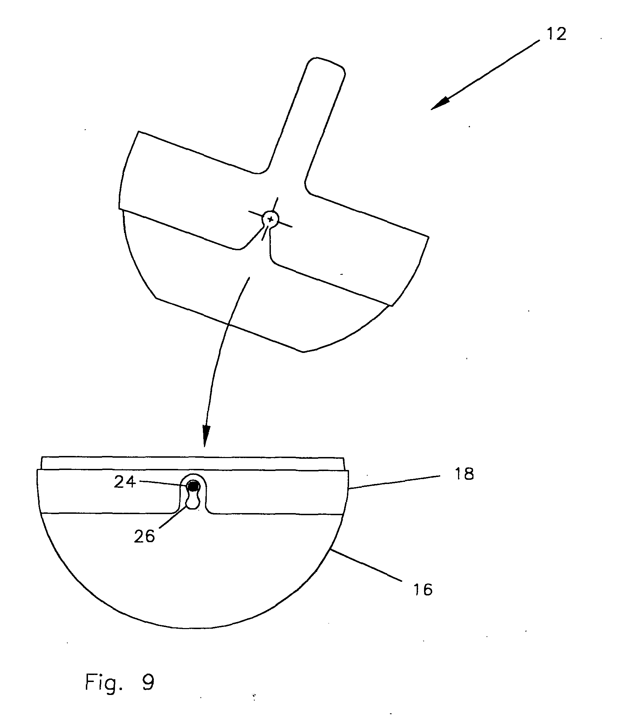

The upper section 16 of the shell has diametrically disposed resilient lugs 22 in each of which are provided a pair of vertically spaced holes 24 and 26 which are in this embodiment conjoined. When the upper holes 26 engage the axles 20 the two shell sections are secured together in a closed configuration and the shell can roll along the ground, but when the lower holes 24 are engaged with the axles 20 the upper section 16 can be rotated round the lower section 18 to the position shown in Fig. 9 allowing complete access to the interior of the shell. The resilient nature of the lugs 22 allows them to be moved outwardly to disengage holes from the axles 20 or to spring inwardly to engage holes.

The handle 14 has a handle portion 30 which in this embodiment is telescopic, and a U shaped yoke 32 whose legs 34 and 36 are resiliently biassed inwardly. At the ends of the legs 34 and 36 are holes (not illustrated) which fit over the axles 20, normally inside the lugs 22, so that the shell can be pulled along.

The container 12 is roughly hemispherical in shape but has a flat bottom 40 and a handle 42. Diametrically opposed slots 44, each substantially in the shape of an inverted U, are formed in the sides of the container 12 to engage the inner axles 21 and support the container in the lower portion 18 of the outer shell. In this embodiment the clots 44 are keyhole shaped and have an arcuate bearing surface 46 for engaging the inner axle and inclined side surfaces for guiding the axle to the bearing surface 46. Fig. 9 shows the container 12 being placed into the lower shell portion 18 with the upper shell section 16 in the open shell position beneath the lower shell section 18. The container 12 is freely rotatable on the fixed axles 21 so that as the shell is being pulled along the container remains upright as its centre of gravity is below the axis about which it is suspended.

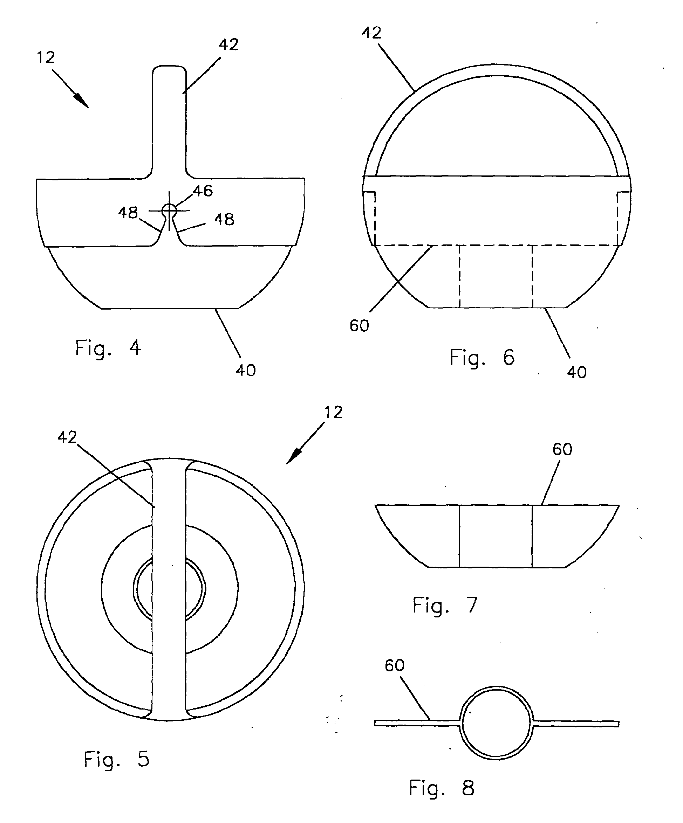

An insert 60, seen best in Figs. 6 to 8, is removably located in the container 12 to subdivide it into a number of open topped compartments including, for example, a central one for a bottle.

The embodiment described is basically intended for use by schoolchildren and is light enough to be pulled and lifted by them. Typically, the apparatus may be loaded in the morning with the child's lunch and taken to school by the child with the shell in its closed position. At lunchtime, the child can open the shell,. remove the container stand it on its flat bottom on a table, eat lunch, restore the container to the shell and close the shell.

## Claims

1. Transport apparatus comprising an outer shell having a circular cross section, a pair of diametrically opposed stub axles fixed on the outer of the shell, a pair of aligned stub axles fixed on the inner surface of the shell, a handle freely rotatable on the external stub axles, and a container freely rotatable on the inner stub axles, the outer shell having an upper section which is removable to allow access to the inner container.

2. Apparatus as claimed in claim1, in which the outer shell is spherical.

3. Apparatus as claimed in claim 2, in which the outer shell comprises upper and lower substantially hemispherical sections, the axles being mounted on the lower section while the upper section has diametrically opposed resilient lugs each provided with a hole for removably engaging an external axle.

4. Apparatus as claimed in claim 3, in which each lug has two holes, one for engaging an axle to close the shell and the other engaging the axle to allow rotational movement or the upper shell section relative to the lower section and thus access to the interior of the shell.

5. Apparatus as claimed in claim 2, in which the container has diametrically opposed brackets for engaging the inner axles to support the container.

6. Apparatus as claimed in claim 5, in which the brackets are preferably keyhole shaped to provide an upper arcuate bearing surface and lower side surfaces for guiding an axle towards the bearing surface.

7. Apparatus as claimed in any preceding claim, in which the container has a handle and a flat bottom, and is subdivided to provide open topped compartments.

8. Apparatus as claimed in claim 7, in which the handle has a U-shaped yoke whose legs are resiliently biassed into engagement with the outer stub axles.

9. Apparatus as claimed in claim 8, in which the legs have circular apertures for engaging the stub axles.
